# EUROPEAN PATENT APPLICATION

(11) **EP 0 635 737 A1**
(43) Date of publication of application: **25.01.1995**
(21) Application number: 94304728.2
(22) Date of filing: 28.06.1994
(51) Int. Cl.: G02B 6/30, G02B 6/42, C03C 27/08

(54) **Brazed bonding of optical glass fiber and silicon substrate**

(30) Priority: 23.07.1993 GB 9315278; 11.12.1993 GB 9325407
(71) Applicant: LUCAS INDUSTRIES PUBLIC LIMITED COMPANY, Solihull, West Midlands B91 3TX (GB)
(72) Inventor: Jacobs-Cook, Alan James, Birmingham, B14 7QW (GB); Pinnock, Robert Andrew, Birmingham, B30 2DN (GB)
(74) Representative: Robinson, John Stuart

(57) **Abstract**

A device is provided having an optical glass fibre (16) bonded to a silicon substrate (2) via a brazed bond (18). The bond completely seals the fibre (16) within an alignment groove (8). A cover (not shown) is provided such that the device can be evacuated. The brazed bond does not outgas and hence a high vacuum can be maintained within the device. The brazing alloy comprises at least one of titanium, zirconium, chromium, aluminium and vanadium.

## Description

The present invention relates to a device having brazed bonds and a method of manufacture thereof.

Micro machined resonant sensors consist of a thin silicon bridge or cantilever formed over a substrate, such as silicon. The bridge or cantilever has a resonant frequency which, for instance, is a function of the temperature and/or pressure experienced by the sensor. The bridge or cantilever typically has a resonant frequency of about 100KHz with quality (Q) factors of up to 100000. Such sensors may be driven, and the vibration of the bridge or cantilever sensed, by optical means. This provides a sensor with good immunity to electrical noise and which may operate at extremes of temperature eg - 50°C to 300°C.

In order to obtain the high Q values available, the bridge or cantilever must oscillate in a substantially evacuated environment, so as to minimise damping due to viscous drag. This requires that the entry of the optical fibre into the sensor must be fluid sealed so as to prevent the vacuum being lost.

Known fixing methods have been found to be not entirely suitable. The seal between the fibre and the sensor must not compromise the vacuum. Thus materials which outgas, either during manufacture or during the subsequent life of the sensor, are not suitable. This constraint rules out many adhesives and epoxy resins.

The sensors may be subjected to high temperatures. The devices are suitable for use in temperatures of up to three hundred degrees centigrade. In addition, the manufacturing of the sensors may involve the use of anodic bonding techniques which require temperatures of about four hundred and fifty degrees centigrade. High temperature optical fibres and their coatings are able to withstand temperatures of the order of seven hundred and fifty degrees centigrade or greater without sustaining damage. Thus the seal must be able to withstand temperatures of at least four hundred and fifty degrees centigrade and be makable at temperatures below those at which damage to the optical fibre or the coating thereof may occur. This constraint restricts the use of many solders and adhesives.

There is also a requirement for good thermal matching at the joints. Differences in the rates of thermal expansion between the sealing material and the surrounding materials may lead to a temperature induced degradation of the seal. Conventional glass solders tend to require the use of too high a temperature, while those capable of use at lower temperatures often have large coefficients of thermal expansion which are poorly matched to those of optical fibres and silicon.

It is desirable to use sealing materials that wet the surface of the materials so as to obtain a good seal.

According to a first aspect of the present invention, there is provided a device comprising at least one first element of glass bonded to a second element of silicon or glass by a brazed bond formed such that a surface region of the bond comprises an alloy containing at least one of titanium, zirconium, chromium, aluminium and vanadium.

The surface region functions as an "active brazing alloy". The active brazing alloy contains a reactive metallic component which reacts with the materials forming the joint to allow a seal to be formed.

The alloy may comprise silver and copper as its main constituents with traces of other elements such as tin or indium. An example of a suitable alloy is 59% Ag, 27.25% Cu, 12.5% In and 1.25% Ti. Such an alloy is sold as "Incusil-ABA" by Wesgo Inc. of 477 Harbour Boulevard, Belmont, 3, California, U.S.A. A further example of an alloy is 63% Ag, 34.25% Cu, 1.75% Ti and 1% Sn. Such an alloy is sold as "Cusin-1 ABA" by Wesgo Inc.

The surface region may be formed by coating or otherwise introducing at least one of titanium, zirconium, chromium, aluminium and vanadium to the surface of the glass element such that melting of a bonding material forms the surface layer. Alternatively the bonding material may have the above metallic elements distributed throughout the bulk as well as the surface of the material, such that the surface region of the bonding material has the same composition as the bulk thereof.

Advantageously a local resistive heater may be formed in the device. A narrow conductive strip of metal may be formed on the surface of the silicon or glass in the region where the bond is to be made. The strip may be arranged to be connected to a power supply, for example, by contacts formed at each end of the strip. The contacts may be positioned so as to cooperate with spring loaded contacts of the power supply.

Preferably the device comprises a silicon structure to which the element is bonded. The silicon structure may, for example, be a cover or a side wall of an electronic device or a sensor device. Alternatively the device may comprise a glass structure, such as a cover of an electronic device or a sensor device.

Preferably the element is an optical fibre or a termination for an optical fibre.

The optical fibre may be held within, and secured to, an alignment passage, such as a groove. The bonding material may be used to bond the fibre or the termination for a fibre to the groove and to fill a region of the groove so as to form a fluid tight seal. The groove may be closed by a cover placed over the groove so as to define a plane surface. Other items may be bonded to the cover.

Advantageously the first element passes through an enlarged region. The enlarged region enables the brazed bond to encircle the first element within the enlarged region, thereby enhancing the integrity of the bond. In an embodiment having an optical fibre within an alignment groove, a portion of the groove may be enlarged such that the fibre within that enlarged portion does not touch the sides of the groove. Thus the bonding material may fill the enlarged portion and encircle the fibre passing therethrough so as to ensure a fluid tight seal within the alignment groove.

According to a second aspect of the present invention, there is provided a method of bonding a first element of glass to a second element of silicon or glass, comprising the steps: of placing a sample of bonding material adjacent the first element in a region of the second element to which the first element is to be bonded, at least one of the bonding material and the first element having a surface layer comprising at least one of titanium, zirconium, chromium, aluminium and vanadium; heating the bonding material so as to melt the material and then cooling the material so as to form a bond between the first element and the second element.

The bonding material may be heated by local heating so as to prevent or minimise the warming of other components or structures within the device. Induction heating may be employed. The silicon and/or the glass experience less heating than the metallic alloy.

Alternatively radiative heating may be used. Local heating may be obtained from a localised radiation source, such as an electrically heated coiled tungsten filament, similar to those used in incandescent lights.

As a further alternative, microwave heating may be used. Eddy current heating as a result of coupling microwave energy into the bonding material may be used to warm the bonding material.

Preferably the bonding material is heated by a local resistive heater formed in the device. A narrow conductive strip of metal may be formed on the surface of the silicon in the region of the bond. The strip is arranged to be connected to a power supply, for example, the contacts may be formed at each end of the strip. The contacts may be positioned so as to cooperate with spring loaded contacts of the power supply. Resistive heating of the strip when a current passes therethrough may melt the bonding material.

Furthermore, the resistance of the strip may be monitored to provide an indication of temperature. The profile of the strip may be controlled during manufacture thereof so as to control the heat distribution during heating. Thus the heat production may be limited to the area of the bond.

The present invention will be further described, by way of example, with reference to the accompanying drawings, in which:
Figure 1 is a perspective view of an incomplete resonant sensor having a heating element integral therewith and constituting an embodiment of the present invention;
Figure 2 is a perspective view of the device shown in Figure 1, after an optical fibre has been bonded thereto;
Figure 3 is a perspective view of a device similar to that shown in Figure 2, in which the heating element is omitted;
Figure 4 is a cross sectional view perpendicular to the axis of the optical fibre in a finished device;
Figure 5 is a cross sectional view along the axis of the optical fibre in a finished device;
Figure 6 is a plan view of a second embodiment of a sensor in which an optical fibre directly addresses a sensing element;
Figure 7 is a cross sectional view along the axis of the optical fibre of the second embodiment;
Figure 8 is a perspective view of a resonant sensor having an enlarged region formed in the alignment groove and constituting an embodiment of the present invention; and
Figure 9 is a cross sectional view of the device shown in Figure 8 along the line A-A after an optical fibre has been bonded into the alignment groove.

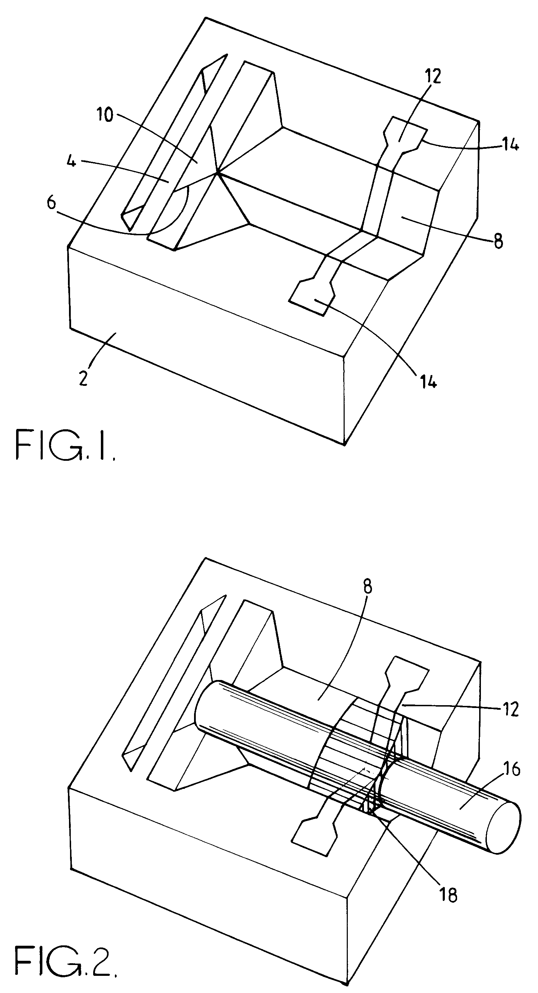

The sensor shown in Figure 1 consists of a block of silicon 2 in which a bridge 4 is positioned above a well 6 formed within the block 2. An alignment and attachment groove 8 is formed within the block 2 so as to hold an optical fibre (not shown) such that the end of the fibre is at 45 degrees to the normal of a reflecting surface 10 constituting one side of the well 6. The position of the bridge 4 is chosen such that light from the optical fibre is reflected from the reflecting surface 10 towards the bridge 4, and such that light reflected from the bridge 4 is directed back to the optical fibre.

A resistive heating strip 12 is formed in a region of the groove 8 in which the optical fibre is to be bonded to the silicon block 2. The strip may be formed by using standard photo-lithographic techniques to form a pattern on the silicon and then forming a metallic layer by evaporation, sputtering or other appropriate techniques. The heating strip is formed with contact pads 14 for making electrical connections with a power supply during the manufacture of the device.

To secure the optical fibre, as shown in Figure 2, the optical fibre 16 is introduced into the groove 8. A suitable amount of brazing alloy 18 is placed in the region of the heating strip 12 and the contact pads 14 are connected to a power supply (not shown) via spring loaded contacts (not shown). Current is passed through the heating strip 12 causing the strip to warm and thereby to heat and subsequently melt the brazing alloy 18 to form a permanent seal. The current flow and/or resistance of the heating strip 12 may be monitored to determine the time at which the brazing alloy melts, since this event is accompanied by a decrease in the resistance between the contact pads 14. It is thus possible to monitor the bonding process in order to obtain consistent quality of brazing.

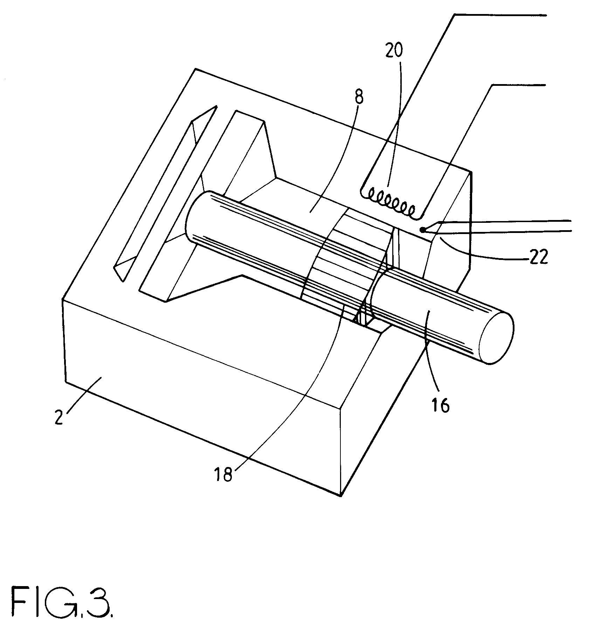

As an alternative, the brazing alloy 18 can be melted by radiative heating, as shown in Figure 3. A suitable amount of brazing alloy 18 is placed adjacent the optical fibre 16 in the region of the groove 8 where the bond is to be formed. A coiled tungsten filament 20 is positioned adjacent the brazing alloy 18 and electrically heated by a current from a power supply (not shown) so as to warm the brazing alloy 18 by radiation emitted from the filament 20. A temperature sensor 22, such as a thermocouple, may be used to monitor the temperature in the vicinity of the brazing alloy 18.

In each case, a bond can be reliably formed in evacuated conditions.

As a further refinement, a glass or silicon cover may be placed over the region of the bond prior to heating the brazing alloy 18. The cover defines a planar upper surface of the completed bond and is wetted during the brazing process, such that the braze forms a fluid tight seal in the groove 8 around the fibre 16.

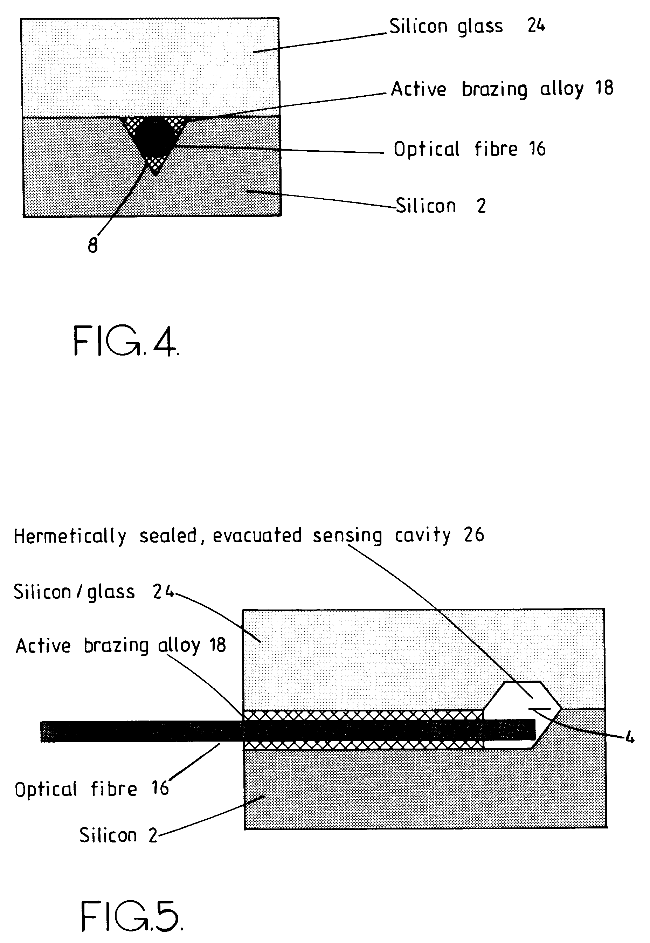

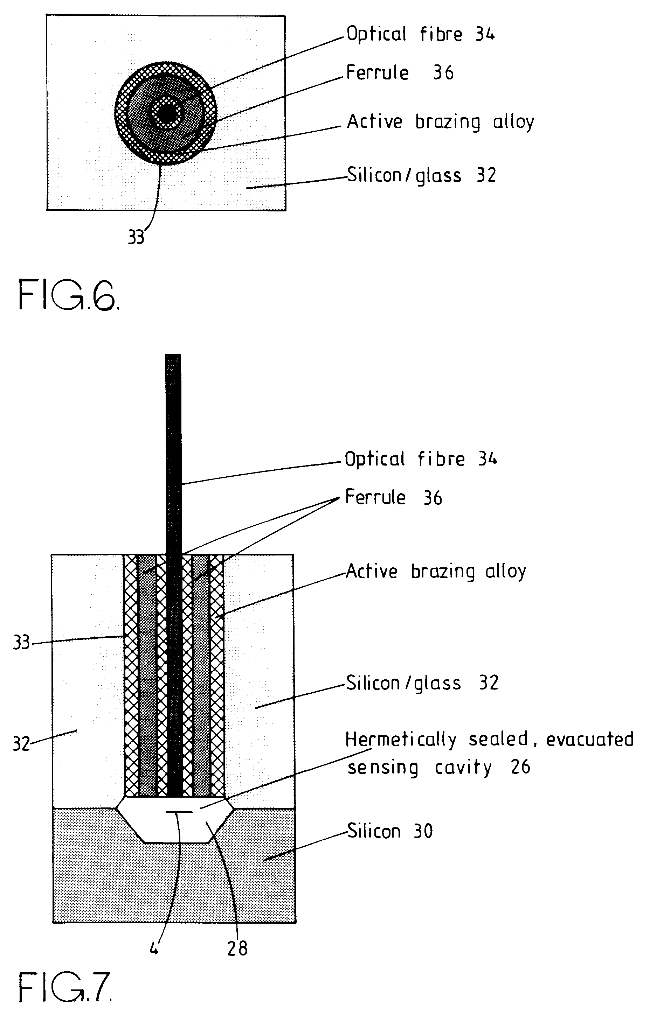

Figures 4 and 5 show schematic views of a completed sensor. A silicon or glass cover 24 is bonded to the silicon block 2 so as to form an evacuated enclosure 26 around the bridge 4. The brazing alloy 18 seals the enclosure 26 against the ingress of liquid or gas along the groove 8.

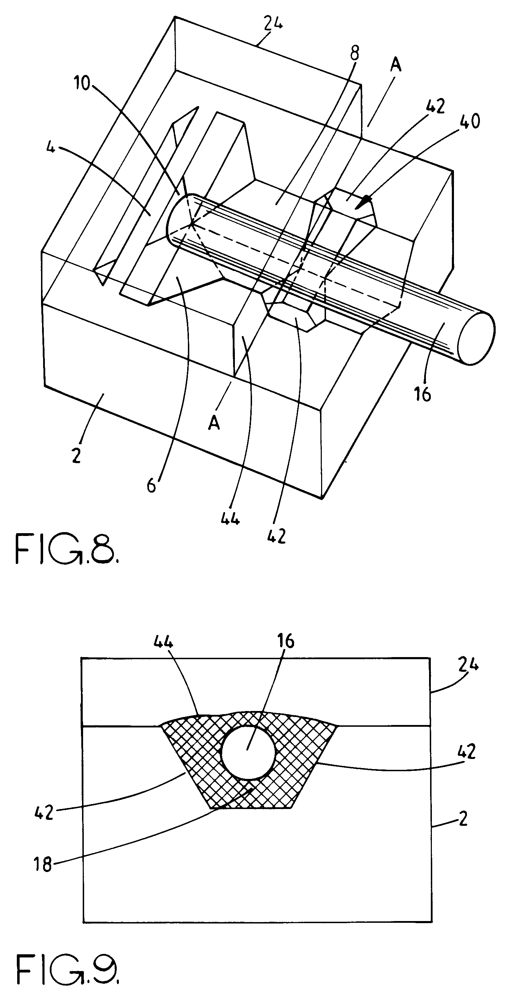

Figures 6 and 7 show a second device having an optical fibre directly addressing a resonant bridge 4 within an evacuated cavity 26. In this embodiment, the resonant bridge is formed over a well 28 etched in a block of silicon 30. A cover 32 of silicon or glass has a passage 33 defined therein for holding an optical fibre 34. The fibre 34 is held within a ferrule 36. The ferrule 36 is held within the passage 33.

The bonds between the fibre 34 and the ferrule 36, and between the ferrule 36 and the cover 32, are formed using the bonding material. Thus a fluid tight bond is formed which does not outgas. The cover 32 may be bonded to the silicon 30 by brazing or silicon fusion bonding. The ferrule 36 may be glass or a ceramic.

Figure 8 shows an embodiment of a resonant sensor similar to that shown in Figures 1 to 4. Similar parts will be designated by the same reference numbers used hereinbefore. The alignment and attachment groove 8 has an enlarged region 40 formed therein. The enlarged region is formed by standard etching techniques and, as shown in Figure 9, has side walls 42 parallel with the respective side wall of the alignment groove 8. The optical fibre 16 is not in contact with any surface in the enlarged region 40 and thus the brazing alloy (omitted for clarity) is free to flow around the circumference of the fibre 16 and bond thereto. The cover 24 may completely cover or, as shown, partially cover the enlarged region 40. Placing the cover 24 such that it partially overlaps the enlarged region allows the brazing alloy to bond to the surface of the cover 24 facing the silicon block 2 and also to a surface 44 of the cover 24 adjacent the enlarged region 40. Thus the brazing alloy forms a layer over the uppermost part of the fibre 16 (when viewed as illustrated in Figure 9) ensuring that the fibre 16 is encircled by brazing alloy 18 and forming a fluid tight bond.

It is thus possible to reliably form brazed bonds between an optical fibre and silicon or glass. The bond has good wetting characteristics and the bonding material is relatively ductile.

## Claims

1. A device comprising at least one first element of glass (16, 34) bonded to a second element (2, 24, 32) of glass or silicon, characterised in that the bond is a brazed bond formed such that a surface region of the bond comprises an alloy containing at least one of titanium, zirconium, chromium, aluminium and vanadium.

2. A device as claimed in Claim 1, characterised in that a bulk of the brazed bond has substantially the same composition as the surface region.

3. A device as claimed in Claim 1 or 2, characterised by further comprising a resistive heater (12) in the vicinity of the bond.

4. A device as claimed in Claim 3, characterised in that the heater (12) comprises a narrow conductive strip of metal formed on the surface of the second element (2) in a region where the bond is to be formed.

5. A device as claimed in any one of the preceding claims, characterised in that the first element is an optical fibre (13, 34) or a termination for an optical fibre.

6. A device as claimed in Claim 5, characterised in that the optical fibre or the termination for an optical fibre is held within and secured to an alignment passage (8, 33).

7. A device as claimed in Claim 6, characterised in that the alignment passage is a groove (8), the optical fibre (6, 34) or termination for an optical fibre is held within the groove (8), the brazed bond bonds the optical fibre or termination for an optical fibre to a groove (8) and fills a region of the groove (8) so as to form a fluid tight seal.

8. A device as claimed in Claim 7, characterised in that the groove (8) is closed by a cover (24) placed over the groove (8) so as to define a plane surface.

9. A device as claimed in any of Claims 6 to 8, characterised in that the alignment passage (8, 33) has an enlarged region (40), the optical fibre or termination for an optical fibre being arranged to pass through the enlarged region (40) such that the brazed bond encircles the optical fibre or termination for an optical fibre within the enlarged region (40).

10. A device as claimed in Claim 6, characterised by a further comprising a further element (36), the optical fibre (16, 34) being bonded to the further element (36) and the further element (36) being bonded to the second element (32).

11. A method of bonding a first element (16, 34) to a second element (2, 24, 32) in which the first element is of glass and the second element is of glass or silicon, the method characterised by comprising the steps of: placing a sample of a bonding material adjacent the first element (16, 34) in a region where the first element is to be bonded to the second element (2, 24, 32) at least one of the bonding material and the first element having a surface layer comprising at least one of titanium, zirconium, chromium, aluminium and vanadium; heating the bonding material so as to melt the bonding material; and cooling the bonding material so as to form a bond between the first and second elements.

12. A method as claimed in Claim 11, characterised in that the bonding material is heated by local heating.

13. A method as claimed in Claim 12, characterised in that the bonding material is heated by induction heating, microwave heating or radiative heating.

14. A method as claimed in Claim 12, characterised in that the bonding material is heated by a resistive heater (12) formed in the vicinity of the bond.

15. A method as claimed in Claim 14, characterised in that the resistance of the resistive heater (12) is monitored so as to provide an indication of temperature.

16. A method as claimed in any one of Claims 11 to 15, characterised in that the first element (34) is bonded to a further element (36) and the further element is bonded to the second element (32).
